**Europäisches Patentamt**

**European Patent Office**

**Office européen des brevets**

(19)

(11) Veröffentlichungsnummer: **0 297 232 B1**

(12) **EUROPÄISCHE PATENTSCHRIFT**

(45) Veröffentlichungstag der Patentschrift: **07.08.91**

(51) Int. Cl.⁵: **B66B 1/34**

(21) Anmeldenummer: **88106274.9**

(22) Anmeldetag: **20.04.88**

(54) **Istwertgeber für den Lageregelkreis eines Aufzugsantriebes.**

(30) Priorität: **30.06.87 CH 2459/87**

(43) Veröffentlichungstag der Anmeldung:
**04.01.89 Patentblatt 89/01**

(45) Bekanntmachung des Hinweises auf die
Patenterteilung:
**07.08.91 Patentblatt 91/32**

(84) Benannte Vertragsstaaten:
**AT CH DE ES FR GB IT LI**

(56) Entgegenhaltungen:
**EP-A- 0 026 406**
**EP-A- 0 137 102**
**EP-A- 0 197 252**
**GB-A- 2 063 521**
**US-A- 4 658 935**

(73) Patentinhaber: **INVENTIO AG**
**Seestrasse 55**
**CH-6052 Hergiswil NW(CH)**

(72) Erfinder: **Schröder, Joris, Dr.**
**Schädrütihalde 2**
**CH-6006 Luzern(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Istwertgeber für den Lageregelkreis eines Aufzugsantriebes, mit einem Impulsgeber, der mit einer Antriebsscheibe gekuppelt ist, welche mittels eines an der Aufzugskabine befestigten, über eine Umlenkrolle geführten Seiles reibungsschlüssig antreibbar ist, wobei ein Kabinenwegzähler vorgesehen ist, der eingangsseitig mit dem Impulsgeber in Verbindung steht und ausgangsseitig mit einem Eingang einer Regeleinrichtung des Lageregelkreises verbunden ist.

Mit der EP-A-0 026 406 ist eine Antriebssteuerung für einen Aufzug bekannt geworden, die einen ähnlichen Istwertgeber aufweist. Hierbei ist der Impulsgeber mit der Welle des Geschwindigkeitsbegrenzers gekuppelt, der wie üblich durch ein über eine Antriebsscheibe geführtes endloses Seil angetrieben wird, das an der Aufzugskabine befestigt ist und von einer Spannrolle mit Gewicht in der Schachtgrube gespannt wird. Diese in Mikrocomputertechnik ausgeführte Antriebssteuerung weist einen Etagenortspeicher in Form eines Schreib-Lesespeichers auf, in welchem den Stockwerknummern zugeordnete Etagenorte gespeichert sind, die auf eine bestimmte Basis bezogenen Niveauzahlen entsprechen. Die Etagenorte werden für die Stoppeinleitung und die genaue Einfahrt der Aufzugskabine auf einem Stockwerk benötigt. Die Einschreibung der Etagenorte in den Etagenortspeicher erfolgt bei einer Lernfahrt vor der ersten Inbetriebsetzung des Aufzuges. Die Lernfahrt beginnt beim untersten Stockwerk in Aufwärtsrichtung, wobei jeweils beim Erreichen eines Stockwerkes der momentane Zählerstand des Kabinenwegzählers als Etagenort in den Etagenortspeicher übertragen wird. Der Seilantrieb des Geschwindigkeitsbegrenzers weist Schlupf auf, der sich derart bemerkbar macht, dass die bei der Lernfahrt in Aufwärtsrichtung übertragenen Zählerstände kleiner sind als die tatsächlichen Niveauzahlen der betreffenden Stockwerke. Diese Unstimmigkeiten kommen bei allen späteren Aufwärtsfahrten nicht zur Auswirkung, da ja die Zählerstände und Etagenorte genau übereinstimmen. Bei der Abwärtsfahrt tritt ebenfalls Schlupf auf, der sich so auswirkt, dass die Zählerstände des Kabinenwegzählers grösser sind als die tatsächlichen Niveauzahlen der betreffenden Stockwerke. Da bei den Abwärtsfahrten ebenfalls die bei der Aufwärts-Lernfahrt gespeicherten Etagenorte verwendet werden, kann beim Stop der Aufzugskabine nach einer Abwärtsfahrt eine Halteungenauigkeit auftreten, die der Summe des Schlupfes der Aufwärts- und Abwärtsfahrt entspricht.

EP - A - 0 137 102 beschreibt eine Einrichtung zur Steuerung des Bremseinsatzpunktes bei Aufzügen, mit welcher bei der Vorbeifahrt an festen Schachtmarkierungen im Schacht erfasste Messwerte für einen lastabhängig varierbaren Bremseinsatzpunkt zwecks besserer Anhaltegenauigkeit ausgewertet werden. Diese Einrichtung ist für Eingeschwindigkeitsaufzüge mit mechanischer Schlussbremsung konzipiert und lässt sich nicht für die Lösung der in der Anmeldung gestellten Aufgabe verwenden.

Mit EP - A - 0 197 252 ist eine weitere Einrichtung zur Verbesserung der Anhaltegenauigkeit bekannt. Mit dieser wird das Problem eines ungenauen Positionsgebers mittels dessen formschlüssigem Antrieb gelöst, womit die Positionsangaben des angekuppelten Inkrementalgebers konstant genau bleiben. Diese mechanische Lösung benötigt aber ein zusätzliches Antriebsorgan im Schacht, was nicht immer erwünscht ist und mehr kostet als eine einfache elektronische Lösung.

Der Erfindung liegt die Aufgabe zugrunde, einen Istwertgeber gemäss Oberbegriff zu schaffen, der Istwerte erzeugt, mittels welchen die Haltegenauigkeit der Aufzugskabine verbessert werden kann.

Diese Aufgabe wird durch die im Patentanspruch 1 gekennzeichnete Erfindung gelöst. Hierbei ist eine mit dem Kabinenwegzähler verbundene Korrekturtabelle in Form eines Schreib-Lesespeichers vorgesehen, in welcher den Stockwerken zugeordnete, durch Schlupf des Seiles hervorgerufene Anhaltefehler als Korrekturwerte gespeichert sind. Bei der Abfahrt der Aufzugskabine von einem Stockwerk oder der Vorbeifahrt an einem Stockwerk wird ein dem nächsten Stockwerk zugeordneter Korrekturwert aus der Korrekturtabelle abgerufen und dem Kabinenwegzähler zwecks Korrektur des Zählerstandes zugeführt.

Die mit der Erfindung erzielten Vorteile liegen darin, dass der Kabinenwegzähler bei Ankunft in einem Stockwerk stets korrekt anzeigt. Das macht sich insbesondere bei Aufzügen mit grossen Hubhöhen vorteilhaft bemerkbar, da der Schlupf erfahrungsgemäss mit der Hubhöhe zunimmt und hierbei grosse Anhaltefehler entstehen könnten.

Im folgenden wird die Erfindung anhand eines auf der Zeichnung dargestellten Ausführungsbeispieles näher erläutert. Es zeigt:

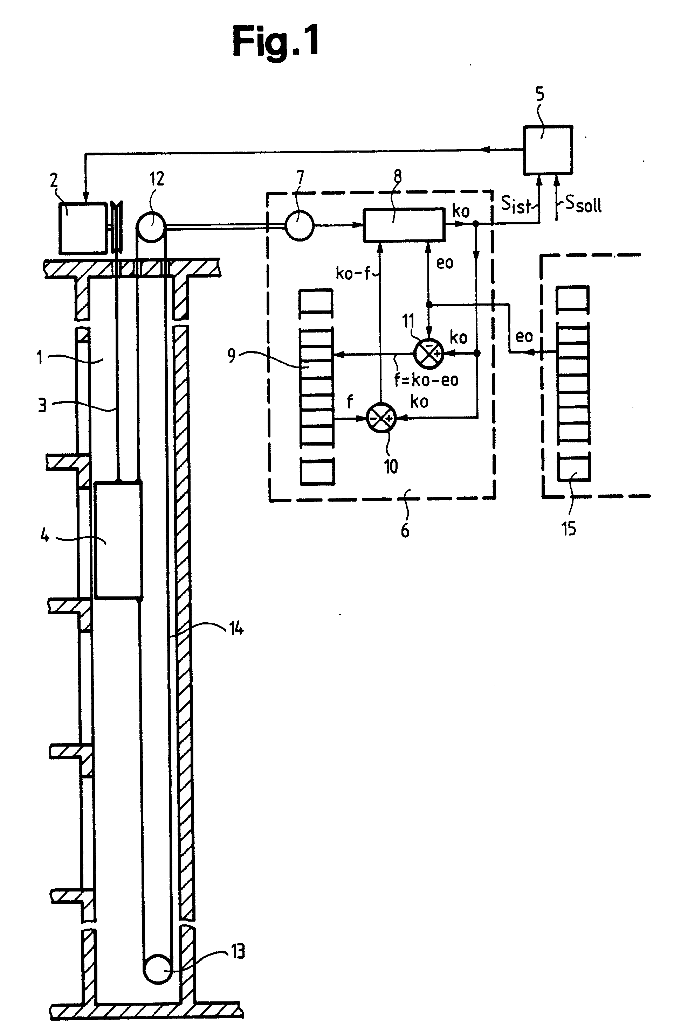

Fig. 1 eine schematische Darstellung eines Aufzuges mit dem erfindungsgemässen Istwertgeber.

In der Fig. 1 ist mit 1 ein Aufzugsschacht bezeichnet, in dem eine von einer Fördermaschine 2 über ein Förderseil 3 angetriebene und mittels eines Gegengewichtes ausbalancierte Aufzugskabine 4 geführt ist. Die Fördermaschine 2, eine Regeleinrichtung 5 und ein Istwertgeber 6 bilden einen Lageregelkreis, wobei wie üblich die Regeleinrichtung 5 ausgangsseitig mit der Fördermaschine 2 und eingangsseitig mit dem Istwertgeber 6 und einem nicht dargestellten Sollwertgeber verbunden ist.

Der Istwertgeber 6 besteht aus einem Impulsgeber 7 in Form eines Digitaltachometers, einem Kabinenwegzähler 8, einer Korrekturtabelle 9, einem ersten Subtrahierer 10 und einem zweiten Subtrahierer 11. Der Impulsgeber 7 ist mit einer Antriebsscheibe 12 gekuppelt, die mittels eines an der Aufzugskabine 4 befestigten, über eine am unteren Schachtende angeordnete Umlenkrolle 13 geführten Seiles 14 antreibbar ist. Der Kabinenwegzähler 8 ist eingangsseitig mit dem Impulsgeber 7 verbunden, der beispielsweise pro 0,5 mm Fahrweg der Aufzugskabine 4 einen Impuls erzeugt. Die Impulse werden im Kabinenwegzähler 8 zu Ortszahlen summiert, welche der jeweiligen, auf eine bestimmte Basis bezogenen Kabinenposition entsprechen und dem Lageregelkreis als Istwerte $S_{ist}$ zugeführt werden. Der Kabinenwegzähler 8 ist ferner ausgangsseitig mit je einem Eingang des ersten und zweiten Subtrahierers 10, 11 verbunden, wobei der andere Eingang des ersten Subtrahierers 10 und der Ausgang des zweiten Subtrahierers 11 mit der Korrekturtabelle 9 in Verbindung stehen und der Ausgang des ersten Subtrahierers 10 am Kabinenwegzähler 8 angeschlossen ist. Mit 15 ist ein aus der EP 0 026 406 bekannter Etagenortspeicher bezeichnet, der mit dem anderen Eingang des zweiten Subtrahierers 11 und dem Kabinenwegzähler 8 in Verbindung steht. Im Etagenortspeicher 15 sind den Ortszahlen der Stockwerke entsprechende Etagenorte gespeichert, die sich auf die vorstehend erwähnte bestimmte Basis beziehen. In einer bevorzugten Ausführungsform sind der Kabinenwegzähler 8, die Korrekturtabelle 9 sowie der erste und zweite Subtrahierer 10, 11 Teile eines Mikrocomputersystems, wobei die Funktionen der Subtrahierer 10, 11 vom Prozessor des Systems ausgeführt werden und die Korrekturtabelle 9 ein Schreib-Lesespeicher ist, der den einzelnen Stockwerken zugeordnete Speicherplätze aufweist, in welchen wie nachstehend näher beschrieben durch Schlupf des Seiles 14 hervorgerufene Anhaltefehler gespeichert sind.

Vor der ersten Inbetriebsetzung des Aufzuges wird während einer Abwärts-Lernfahrt bei jedem Stockwerk aus dem Zählerstand ko und dem betreffenden Etagenort eo im zweiten Subtrahierer 11 eine einen Anhaltefehler darstellende Differenz ko-eo=f gebildet, die jeweils in den, dem vorhergehenden Stockwerk zugeordneten Speicherplatz der Korrekturtabelle 9 als Korrekturwert eingeschrieben wird. Danach wird der Zählerstand gelöscht und der Etagenort eo als neuer Zählerstand in den Kabinenwegzähler 8 übertragen.

Nach der Inbetriebsetzung des Aufzuges wird während der Abwärtsfahrten bei einem Halt oder der Vorbeifahrt an einem Stockwerk der dem nächsten Stockwerk zugeordnete Korrekturwert f aus der Korrekturtabelle 9 abgerufen und dem ersten Subtrahierer 10 zugeführt. Im ersten Subtrahierer 10 wird aus dem Zählerstand ko und dem Korrekturwert f eine Differenz ko-f gebildet und als neuer Zählerstand in den Kabinenwegzähler 8 übertragen, so dass bei Ankunft auf dem nächsten Stockwerk der Zählerstand ko genau mit dem Etagenort eo dieses Stockwerkes übereinstimmt. Während der Aufwärtsfahrten ist eine Korrektur des Zählerstandes nicht erforderlich, da die Etagenorte eo während einer Aufwärts-Lernfahrt mittels des Kabinenwegzählers 8 in den Etagenortspeicher 15 eingeschrieben wurden, so dass keine durch Schlupf verursachte Anhaltefehler während der Aufwärtsfahrten auftreten können.

**Patentansprüche**

1.  Istwertgeber für den Lageregelkreis eines Aufzugsantriebes, mit einem Impulsgeber (7), der mit einer Antriebsscheibe (12) gekuppelt ist, welche mittels eines an der Aufzugskabine (4) befestigten, über eine Umlenkrolle (13) geführten Seiles (14) antreibbar ist, wobei ein Kabinenwegzähler (8) vorgesehen ist, der ausgangsseitig mit einem Eingang einer Regeleinrichtung (5) des Lageregelkreises verbunden ist,

    dadurch gekennzeichnet,
    - dass eine, als Schreib-Lesespeicher ausgebildete, den Stockwerken zugeordnete, bei Abfahrt und Vorbeifahrt der Kabine (4) bei einem Stockwerk abrufbare, durch Anhaltefehler erzeugte, den Zählerstand (ko) des Kabinenwegzählers (8) korrigierende Korrekturwerte aufweisende Korrekturtabelle (9) vorhanden ist, und
    - dass ein, mit der Regeleinrichtung (5) in Verbindung stehender, vom korrigierter, vom Impulsgeber (7), von einem Korrekturfaktor (ko-f) und einem Etagenort (eo) abhängigen Zählerstand (ko) stammender Weg-Istwert (S ist) vorhanden ist.

2.  Istwertgeber nach Anspruch 1
    dadurch gkennzeichnet,
    - dass ein, den Korrekturfaktor (ko-f) aus dem Korrekturwert (f) und dem Zählerstandwert (ko) bildendender erster Subtrahierer (10) mit dem Ausgang (ko-f) eine Verbindung zum Kabinenweagzähler (8) aufweist, und
    - dass ein, eine Differenz (ko-eo) aus Etagenort (eo) und Zählerstand (ko) bildender zweiter Subtrahierer (11) mit dem Ausgang (ko-eo) eine Verbindung mit der Korrekturtabelle (9) aufweist.

## Claims

1. Actual value transmitter, for the load-regulating loop of a lift drive; with a pulse generator (7), which is coupled with a drive pulley (12), which is drivable by means of a cable (14), which is fastened at the lift cage (4) and guided over a deflecting roller (13), wherein a cage travel counter (8) is provided, which is connected at the output with the input of a regulating equipment (5) of the load-regulating loop, characterised thereby,

   - that a correction table (9) is present, which is constructed as read-write store, is associated with the storeys, can be called up on the cage (4) departing from or travelling past a storey and displays correction values, which are produced by stopping erros and correct the counter state (ko) of the cage travel counter (8), and
   - that an actual travel value (S ist) is present, which stands in connection with the regulating equipment (5) and originates from the corrected counter state (ko), which is dependent on the pulse generator (7), a correction factor (ko-f) and a storey location (eo).

2. Actual value transmitter according to claim 1, characterised thereby,

   - that a first subtractor (10), which forms the correction factor (ko-f) from the correction value (f) and the counter state value (ko), by the output (ko-f) displays a connection to the cage travel counter (8) and
   - that a second subtractor (11), which forms a difference (ko-eo) from the storey location (eo) and the counter state (ko), by the output (ko-eo) displays a connection with the correction table (9).

## Revendications

1. Transmetteur de valeurs réelles pour le circuit de régulation de position d'un dispositif d'entraînement d'ascenseur, comportant un générateur d'impulsions (4), qui est accouplé à une poulie d'entraînement (12), qui peut être entraînée par un câble (14) fixé à la cabine d'ascenseur (4) et circulant sur un galet de renvoi (13), et dans lequel il est prévu un compteur (8) du trajet parcouru par la cabine, dont le côté sortie est raccordé à une entrée d'un dispositif de régulation (5) du circuit de régulation de position, caractérisé en ce

   - qu'il est prévu un tableau de correction (9) réalisé sous la forme d'une mémoire d'enregistrement/lecture, associé aux étages, pouvant être interrogé lors du départ et du passage de la cabine (4) au niveau d'un étage et contenant des valeurs de correction produites par des erreurs au niveau des arrêts et corrigeant l'état de comptage (ko) du compteur (8) du trajet parcouru par la cabine, et en ce
   - qu'il est prévu une valeur réelle de trajet parcouru (S réelle) en liaison avec le dispositif de régulation (5) et établie à partir de l'état de comptage corrigé (ke), qui dépend du générateur d'impulsions (7), d'un facteur de correction (ko-f) et d'un emplacement d'étage (eo).

2. Transmetteur de valeurs réelles suivant la revendication 1, caractérisé par le fait

   - qu'un premier soustracteur (10), qui forme le facteur de correction (ko-f) à partir de la valeur de correction (f) et de la valeur (ko) de l'état de comptage du compteur, et dont la sortie (ko-f) est raccordée au compteur (8) du trajet parcouru par la cabine, et
   - qu'un second soustracteur (11), qui forme une différence (ko-eo) à partir de l'emplacement (eo) de l'étage et de l'état de comptage (ko) du compteur, est raccordé par sa sortie (ke-eo) au tableau de correction (9).

# Fig.1